# EUROPÄISCHE PATENTANMELDUNG

(11) **EP 1 728 918 A2**
(43) Veröffentlichungstag der Anmeldung: **06.12.2006**
(21) Anmeldenummer: 06007356.6
(22) Anmeldetag: 07.04.2006
(51) Int. Cl.: D21B 1/32

(54) **Verfahren zur Entfernung von Störstoffen aus einer wässrigen Papierfasersuspension**

(30) Priorität: 12.05.2005 DE 102005021929; 17.12.2005 DE 102005060476
(71) Anmelder: Voith Patent GmbH, 89522 Heidenheim (DE)
(72) Erfinder: Dockal-Baur, Jürgen, 88273 Fronreute-Fronhofen (DE); Selder, Harald, 88281 Schlier (DE)

(57) **Zusammenfassung**

Das Verfahren dient der Entfernung von Störstoffen, z.B. Druckfarbenpartikeln, aus einer wässrigen Faserstoffsuspension (S), insbesondere Altpapiersuspension. Zunächst wird diese in einer Fraktionierung (3) in eine Feinfraktion (F), insbesondere Kurzfaserfraktion, und eine Grobfraktion (G), insbesondere Langfaserfraktion, aufgeteilt. Beide so gebildeten Fraktionen werden dann in jeweils unterschiedlich betriebenen Flotationen (1, 2) behandelt, um die Störstoffe im Flotationsschaum abzuführen. Dabei können die Parameter und verwendeten Apparate der beiden Flotationen (1, 2) optimal auf die in den einzelnen Fraktionen vorliegenden Verhältnisse abgestimmt werden.

## Beschreibung

Die Erfindung betrifft ein Verfahren zur Entfernung von Störstoffen aus einer wässrigen Faserstoffsuspension gemäß dem Oberbegriff des Anspruchs 1.

Verfahren der genannten Art werden verwendet, um aus einer Papierfasersuspension zumindest einen Teil der darin suspendierten unerwünschten Feststoffteilchen, sogenannte Störstoffe, auszuscheiden. Bekanntlich wird bei einer Flotation ein mit auszuscheidenden Stoffen enthaltender Schaum oder Schwimmschlamm gebildet. Ein typischer Anwendungsfall eines derartigen Verfahrens ist die Aufbereitung von einer aus bedrucktem Altpapier gewonnenen wässrigen Fasersuspension, in der die Druckfarbenpartikel bereits von Fasern abgelöst sind, so dass sie sich ausflotieren lassen. Der hier beschriebene Flotationsvorgang nutzt die Unterschiede zwischen Papierfaserstoff und unerwünschten Feststoffteilchen in der Art, dass der Faserstoff auf Grund seines eher hydrophilen Charakters in der Fasersuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Da durch das hier angesprochene Flotationsverfahren Fasern von Verunreinigungen getrennt werden (beides sind Feststoffe), spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Weit verbreitet sind Verfahren mit zwei aufeinander folgenden Flotationsschritten, zwischen denen eine mechanische Behandlung durchgeführt wird. So ist aus dem Fachaufsatz Herbert Britz "Flotationsdeinking - Grundlagen und Systemeinbindung", Wochenblatt für Papierfabrikation 10, 1993, Seiten 394 - 401, bekannt, zunächst eine "Flotation I", dann eine Hochkonsistenz-Dispergierung für deren Gutstoff und dann eine "Flotation II" zur Entfernung der beim Dispergieren von der Faser abgelösten Druckfarben zu verwenden.

Solche Verfahren sind sehr wirksam, aber relativ aufwändig, da jeder Teilschritt eine vollständige selektive Flotation für den gesamten Papierfaserstoff enthält.

Aus der DE 102 56 519-A1 ist ein Verfahren bekannt, bei dem der gesamte Faserstoff zunächst flotiert wird (Flotation 1). Dann erfolgt eine Faserfraktionierung. Die Grobfraktion dieser Fraktionierung wird dispergiert und anschließend zusammen mit der Feinfraktion der Fraktionierung ein zweites Mal flotiert (Flotation 2).

Der Erfindung liegt die Aufgabe zu Grunde, ein Aufbereitungsverfahren zu schaffen, mit dem eine möglichst effektive Ausscheidung der Störstoffpartikel erzielbar ist, ohne dass ein zu hoher apparativer und betriebsmäßiger Aufwand benötigt wird.

Diese Aufgabe wird durch die kennzeichnenden Merkmale des Anspruchs 1 gelöst.

Das erfindungsgemäße Verfahren hat den Vorteil, dass die Flotationen jeweils nur eine Fraktion behandeln und optimal auf die speziellen Anforderungen, die diese Fraktionen stellen, abgestimmt werden können.

Typischerweise wird das Verfahren an Altpapiersuspensionen angewandt. Dieses Ausgangsmaterial enthält ein Gemisch von verschiedenen Fasern und Verunreinigungen. Von diesem Gemisch wird durch die Fraktionierung ein geringerer Anteil an Farb- und/oder Füllstoffen in die Grobfraktion überführt, während die Feinfraktion größere Mengen der flotierbaren Störstoffe zusammen mit den Kurzfasern enthält. In einer so gebildeten Feinfraktion sind die Flotationsbedingungen günstiger als in der Grobfraktion. Das heißt, die Flotation der Feinfraktion kann auch z.B. mit höherer Konsistenz zu einem guten Ergebnis gebracht werden, während z.B. die übliche Vollstromflotation bei einer Konsistenz von ca. 1,3 % durchgeführt wird. Bei Anwendung des erfindungsgemäßen Verfahrens kann die Feinfraktion bei ca. 1,5 % und die Grobfraktion bei ca. 0,9 % flotiert werden, wobei eine Feinabstimmung dieser Konsistenzwerte auf die Bedingungen und Anforderungen leicht möglich ist. Andere Einflussmöglichkeiten auf die Flotation bieten Variationen der Chemikaliendosierung.

Die Erfindung wird erläutert an Hand von Zeichnungen. Dabei zeigen:
- Figur 1:: Ein Schema des erfindungsgemäßen Verfahrens;
- Figur 2:: Schematisch: Eine erfindungsgemäße Anlage;
- Figur 3:: Eine Variante des Verfahrens;
- Figur 4:: Schematisch: Eine Anlage für das in Fig. 3 gezeigte Verfahren.

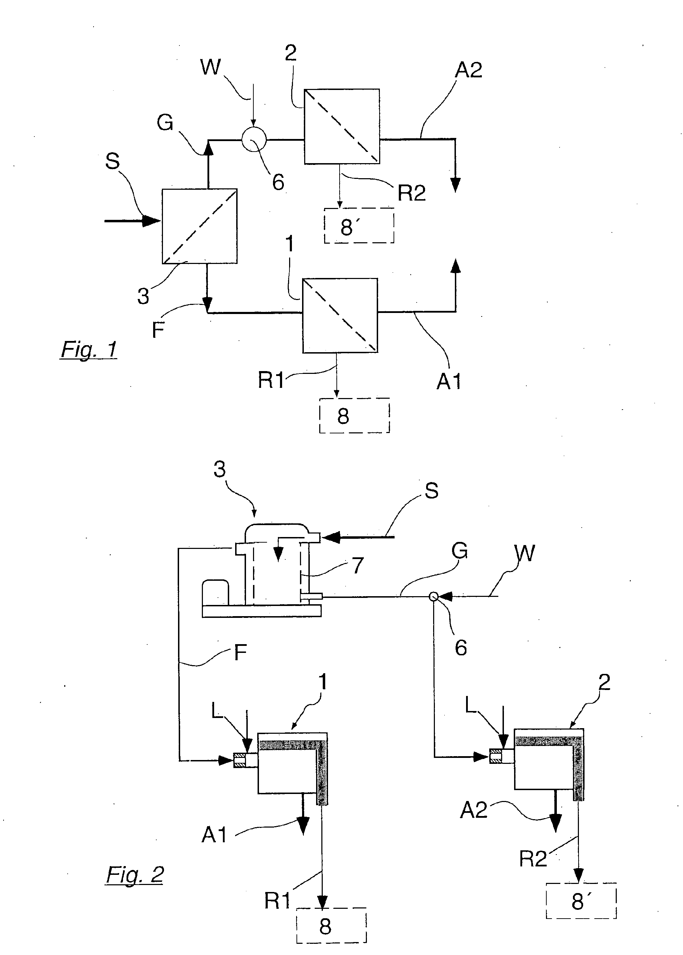

Fig. 1 zeigt ein einfaches Schema, bei dem die wässrige Faserstoffsuspension S zunächst einer Fraktionierung 3 zugeführt wird. Bei einer solchen Fraktionierung werden die Fasern, die signifikant länger, eventuell auch steifer als die übrigen Fasern sind, in die Grobfraktion G geführt, während die Kurzfasern, Feinstoffe, Füllstoffe und feine Störstoffpartikel in die Feinfraktion F gelangen. Diese Betrachtung erfasst nur die Feststoffe; die Flüssigkeit, also überwiegend Wasser, fließt mit beiden Fraktionen ab. Dabei können sich Verschiebungen der Konsistenz ergeben, und zwar normalerweise so, dass die Feinfraktion F eine geringere Konsistenz hat als die Grobfraktion G. Die Fraktionierung kann auch so durchgeführt werden, dass alle Fasern oder ein sehr großer Teil von ihnen in die Grobfraktion G gelangt. Die Feinfraktion F enthält dann wenig Fasern (auch wenig Kurzfasern) aber einen großen Teil der organischen und anorganischen Feinstoffe einschließlich der zu flotierenden Störstoffe. Dabei wird der Anteil der Fasern in der Regel als Rückstand des Siebes R 100 nach Bauer-McNett ermittelt (Labormethode nach TAPPI Standard T 233). Feinstoffe fallen in derselben Analyse als Durchlauf des Siebes an.

Wie die Fig. 1 zeigt, wird die Feinfraktion F in eine Flotation 1 geführt und dort in der an sich bekannten Weise von Störstoffen gereinigt. Diese Flotation 1 kann man auch als Kurzfaserflotation bezeichnen, da ihre Betriebsparameter auf eine mit Kurzfasern und Feinstoffen besonders angereicherte Suspension abgestimmt sind. Die Vorgänge bei der Flotation 1 sind bekannt; es wird ein Flotationsschaum R1 gebildet, der einen großen Teil der Störstoffe enthält, sowie ein gereinigter Gutstoff A1 mit dem überwiegenden Teil der Fasern.

Die Grobfraktion G der Fraktionierung 3 wird mit Wasser W verdünnt und in der Flotation 2 - die man auch als Langfaserflotation bezeichnen kann - gereinigt, aus der ein gereinigter Gutstoff A2 gewonnen wird. Auch dabei wird ein Flotationsschaum R2 zur Störstoffabfuhr gebildet.

Um das erfindungsgemäße Verfahren optimal und damit besonders wirtschaftlich und effektiv durchführen zu können, besteht die Möglichkeit, die Betriebsparameter und/oder die zur Flotation benutzte Anlage jeweils auf die zu flotierende Suspension, im hier betrachteten Falle die Feinfraktion F und die Grobfraktion G, abzustimmen. Ein wichtiger Parameter bei der Flotation ist die Einlaufkonsistenz, d.h. der Feststoffgehalt, mit dem die Suspension der Flotationsanlage zugeführt wird. Auch die Überlaufmenge, bezogen auf die durchgesetzte Menge an Suspension hat einen starken Einfluss auf die Effektivität, insbesondere auf die Sauberkeit des Gutstoffes. Eine große Überlaufmenge verbessert den Gutstoff, führt aber zu größeren Verlusten oder zu größerem Aufwand in den rejektbezogenen weiteren Stufen. Eine größere Verweilzeit der Suspension im Flotationsbereich kann zumindest in bestimmten Grenzen den Flotationseffekt verbessern bzw. auf schwierigere Stoffe einstellen.

Bei den Flotationschemikalien können Art und die auf die Faserstoffmenge bezogene spezifische Chemikalienmenge variiert werden. Dabei lassen sich die Kosten für die Chemikalien, die bei den Betriebskosten einer Flotationsanlage eine bedeutende Rolle spielen, minimieren. So können z.B. durch Menge und Art der Chemikalien auf die größere Zähigkeit einer Langfasersuspension im Vergleich zu einer Kurzfasersuspension eingestellt werden. Auch ist durch Wahl des Ortes für die Chemikalienzugabe eine gezielte Veränderung möglich. Bekanntlich können Chemikalien zumindest bereits teilweise bei der Auflösung zugesetzt werden und auch unmittelbar vor der Flotationsanlage.

Auch Menge und Blasengröße der zugeführten Flotationsluft beeinflussen den Flotationseffekt, werden insbesondere auf die Größe der zu flotierenden Teilchen abgestimmt. Eine größere Anzahl von Flotationszellen kann bei sonst gleichen Parametern deren Wirkung verstärken. Bekanntlich gibt es auch Unterschiede in der Art der Flotationszellen, z.B. ob es sich um einen Flotationsturm mit im Wesentlichen senkrecht fließender Suspensionsführung oder um eine waagerechte Flotationszelle handelt. Während die meisten Flotationszellen im Erdschwerefeld betrieben werden, besteht auch die Möglichkeit, z.B. durch Wirbel oder Zyklone das Schwerefeld zu verstärken. In vielen Fällen wird auf der Rejektseite einer Flotationsanlage erneut ein oder mehrmals flotiert, was man üblicherweise als rejektbezogene weitere Flotationsstufe bezeichnet. Dadurch lässt sich z.B. die Überlaufmenge vergrößern und dennoch eine gute Ausbeute der gesamten Flotationsanlage erzielen. Auch auf der Gutstoffseite können mehrere Flotationsstufen nacheinander durchströmt werden. In vielen Fällen wird es ausreichen, eine der genannten Parameter zu ändern, es ist aber ohne Weiteres möglich, auch mehrere dieser genannten Parameter zur Lösung der erfindungsgemäßen Aufgabe zu verändern.

Zur Verdeutlichung des in Fig. 1 gezeigten Funktionsschemas zeigt die Fig. 2 etwas mehr Details, ohne dass hier konkrete maschinelle Angaben entnehmbar wären. Gemäß dieser Figur wird für die Fraktionierung 3 eine Nasssiebmaschine von der Art eines Drucksortierers verwendet, der entsprechend den Anforderungen einer Fraktionierung ausgestattet und betrieben wird. Er soll also nicht zur Abtrennung von Schmutzstoffen dienen, bei der möglichst alle Fasern in den Durchlauf gelangen. Die zur Fraktionierung im Drucksortierer erforderlichen Parameter sind an sich bekannt; die wichtigsten sind Form und Größe der Sieböffnungen, Überlaufrate und Siebräumung. Anders als bei der Schmutzstoffentfernung ("Sortierung") besteht also bei der Fraktionierung auch der Überlauf zu einem großen Teil aus Fasern. Die Faserstoffsuspension S wird in das Innere des Gehäuses eines solchen Drucksortierers eingepumpt und mit Hilfe eines Siebkorbes 7 fraktioniert. Die zur Fraktionierung im Drucksortierer erforderlichen Parameter sind an sich bekannt; die wichtigsten sind Form und Größe der Sieböffnungen, Konsistenz der Suspension, Überlaufrate und Art der Siebräumung. Typische Sieböffnungen sind Rundlöcher im Bereich zwischen 0,2 und 0,5 mm oder Schlitze zwischen 0,1 und 0,3 mm. Durch Wahl der Vorrichtungen und Betriebsbedingungen zur Realisierung der Fraktionierung 3 lässt sich die Aufteilung des Faserstoffes in Grob- und Feinfraktion einstellen.

Die Fraktionierung 3 lässt sich alternativ auch durch Verwendung einer Waschvorrichtung 30 betreiben. Das Filtrat der Waschvorrichtung 30 ist dann die Feinfraktion F. Solche Waschvorrichtungen für Faserstoffe sind bekannt. Sie dienen dazu, nicht nur das Wasser vom Feststoff zu trennen (Filter), sondern sollen auch den Feststoff selbst fraktionieren. Eine besonders geeignete technische Ausführungsform und die bevorzugten Parameter sind z.B. in der Patentschrift DE 30 05 681 beschrieben. Es sind auch ähnlich arbeitende Vorrichtungen mit zwei umlaufenden Siebbändern bekannt. Ein Beispiel zeigt die EP 0 341 913.

Bekanntlich kann man Fasern aber auch in Hydrozyklonen fraktionieren, wobei eine Konsistenz zwischen 0,3 % und 0,7 % besonders günstig ist.

Die Feinfraktion F der Fraktionierung 3 wird hier unmittelbar vor Eintritt in eine die Flotation 1 durchführenden nur schematisch gezeichneten Flotationsanlage mit Luft L vermischt und dann zur Flotation gebracht. Die Flotationsanlage kann rejektseitig mehrere Stufen, z.B. zwei, aufweisen. Der dabei gebildete Flotationsschaum R1 wird entfernt und in die Rejektverarbeitung 8 geführt. Je nach Anlage kann die Rejektverarbeitung 8 in einer oder mehreren Flotationsstufen durchgeführt werden, wozu eine Anzahl verschiedener Schaltungsmöglichkeiten an sich bekannt ist. Der Überlauf des fraktionierenden Drucksortierers, also die Grobfraktion G, geht nach Verdünnung mit Wasser W in die Flotation 2. Wie bereits erläutert wurde, wird die Flotation der Grobfraktion G verglichen mit der Feinfraktion F im Allgemeinen unter erschwerten Bedingungen ablaufen. Eine der Gründe hierfür ist die Neigung der Langfasern, Flocken zu bilden, die dann das Ausflotieren von Störstoffen verhindern. Auch ist die Viskosität der Grobfraktion höher als die der Feinfraktion. Eine Reduzierung der Konsistenz, z.B. auf Werte unter 1,3 % verbessert das Flotationsergebnis ganz wesentlich. Da es sich bei der Grobfraktion G nur um einen Teilstrom handelt, belastet die Verdünnung das Gesamtverfahren (Stoffbilanz, Wasserkreisläufe) relativ wenig.

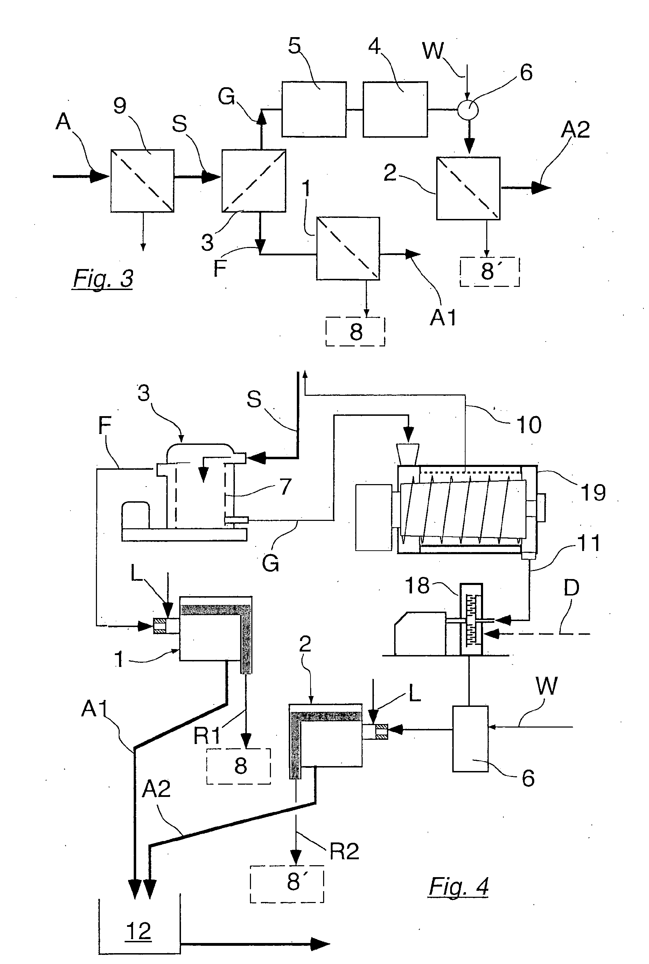

Gemäß Fig. 3 wird das bereits aufgelöste Altpapier A zunächst durch eine Sortierung 9 von groben und mittleren Verunreinigungen gereinigt. Hierzu eignen sich insbesondere Lochsortierer und Hydrozyklone. Die so gebildete Faserstoffsuspension S wird durch Fraktionierung 3 in Feinfraktion F und Grobfraktion G aufgeteilt. In vielen Fällen ist es sinnvoll, vor Durchführung einer Flotation eine Dispergierung 4 vorzunehmen. Ein solcher Fall ist in den Figuren 3 und 4 dargestellt. Die Grobfraktion G erhält durch die Eindickung 5 eine höhere Konsistenz, vorzugsweise zwischen 15 % und 25 %, erfährt dann eine Dispergierung 4 und anschließend eine Verdünnung 6, z.B. auf 0,5 % bis 1 % Konsistenz. Bekanntlich ist der Hauptzweck einer Dispergierung 4 in einer solchen Anwendung die Ablösung von an den Fasern haftenden Störstoffen. Eventuell können auch weitere mit Dispergern erzielbare Effekte, wie z.B. Auflösung der Reststippen, damit verbunden sein. Der dispergierte und verdünnte Stoff gelangt dann in die Flotation 2.

Die Fig. 4 zeigt in ähnlicher Weise wie Fig. 2 eine etwas detailliertere Darstellung einer für das Verfahren benutzbaren Anlage. Dabei wird die Faserstoffsuspension S zunächst einer Fraktionierung 3 zugeführt, die auch hier mit Hilfe eines mit einem Siebkorb 7 ausgestatteten Drucksortierers erfolgt. Bekanntlich kann man Fasern aber auch in Hydrozyklonen oder Siebpressen fraktionieren. Die Feinfraktion F, also der Durchlauf durch den Siebkorb 7, gelangt in die Flotation 1, in der ein gereinigter Gutstoff A1 und ein Flotationsschaum R1 gebildet werden.

Die Konsistenz der Grobfraktion G aus der Fraktionierung 3 wird durch Eindickung 5 auf einen Wert zwischen 15 und 25 % erhöht. Dazu ist hier exemplarisch eine Schneckenpresse 19 angedeutet; bekanntlich gibt es aber auch andere eventuell mehrstufig arbeitende Eindickungsapparaturen. Das Filtrat 10 aus dieser Eindickung 5 kann z.B. zur Bildung der Faserstoffsuspension S verwendet werden. Der eingedickte Stoff 11 gelangt dann über ein nicht gezeigtes Transportschneckensystem in den Scheibendisperger 18, bei dem bekanntlich mit Zähnen versehene Dispergierwerkzeuge in einem kurzen Abstand relativ zueinander bewegt werden und durch hohe Scherkräfte eine Dispergierung des hochkonsistenten Stoffes bewirken. Alternativ kann auch ein Kneter verwendet werden. Normalerweise ist es zweckmäßig, den zur Dispergierung vorgesehenen hochkonsistenten Stoff zu erwärmen, z.B. auf eine Temperatur zwischen 80° und 95° C. Dazu kann, wie hier angedeutet, eine direkte Einspeisung von Dampf D in den Scheibendisperger 18 erfolgen. Eine weitere Möglichkeit zur Dispergierung 4 der Grobfraktion G liegt in der Verwendung eines Kompressionsrefiners, der nach einem Verfahren arbeitet, das z.B. in der DE-A-102 36 962 beschrieben wird. Dieses Verfahren bringt eine sehr gute Dispergierung ohne Faserschädigung. Sie kann im Vergleich zum Scheibendisperger oder Kneter bei geringerer Konsistenz durchgeführt werden, was apparativen und energetischen Aufwand einspart. Die mechanische Arbeit, die bei der Dispergierung 4 auf den Faserstoff übertragen wird, wird üblicherweise auf einen Wert zwischen 30 und 120 kWh/t, vorzugsweise ca. 60 kWh/t, eingestellt.

Nach der Dispergierung 4 erfolgt eine Verdünnung 6 durch Zugabe von Wasser W, z.B. in einer Bütte. Die so vorbereitete Faserstoffsuspension wird anschließend in der Flotation 2 mit gutem Ergebnis von flotierfähigen Verunreinigungen gereinigt. In vielen Fällen können der Gutstoff A1 der Flotation 1 und der Gutstoff A2 der Flotation 2 in einer Bütte 12 vermischt und weiterverarbeitet werden. Dabei ist es in der Regel nicht mehr erforderlich, eine weitere Flotation vorzusehen. Vielmehr bietet die Erfindung die Möglichkeit, weitere Flotationen einzusparen, da durch die spezifisch auf die einzelnen Fraktionen abgestimmten Flotationen 1 und 2 ein bereits voll befriedigendes Flotationsergebnis erzielbar ist.

## Patentansprüche

1. Verfahren zur Entfernung von Störstoffen aus einer wässrigen Faserstoffsuspension (S), insbesondere Altpapiersuspension, mit Hilfe mehrerer selektiver Flotationen, wobei das Verfahren eine Fraktionierung (3) enthält zur Bildung einer faserhaltigen Feinfraktion (F) und einer faserhaltigen Grobfraktion (G),
**dadurch gekennzeichnet,**
**dass** Feinfraktion (F) und Grobfraktion (G) jeweils in separaten Flotationen (1, 2) behandelt werden, deren Flotationswirkungen sich **dadurch** unterscheiden, dass in den separaten Flotationen (1, 2) die Merkmale Einlaufkonsistenz, Überlaufmenge, Verweilzeit, Chemikalienart, spezifische Chemikalienmenge, Ort der Chemikalienzugabe, spezifische Menge der zugeführten Flotationsluft, Blasengröße, Anzahl der Flotationszellen, Art der Flotationszelle, Größe des Schwerefeldes, Anzahl der rejektbezogenen Flotationsstufen oder Anzahl der gutstoffbezogenen Flotationsstufen einzeln oder in Kombination miteinander unterschiedlich gewählt werden.

2. Verfahren nach Anspruch 1,
**dadurch gekennzeichnet,**
**dass** die Feinfraktion (F) mit Kurzfasern und die Grobfraktion (G) mit Langfasern angereichert wird.

3. Verfahren nach Anspruch 2,
**dadurch gekennzeichnet,**
**dass** die die Feinfraktion (F) bearbeitende Flotation (1) eine Kurzfaserflotation und die die Grobfraktion (G) bearbeitende Flotation (2) eine Langfaserflotation ist.

4. Verfahren nach Anspruch 1,
**dadurch gekennzeichnet,**
**dass** die Feinfraktion (F) mit Feinstoffen und die Grobfraktion (G) mit Kurzfasern und Langfasern angereichert wird.

5. Verfahren nach Anspruch 1, 2, 3 oder 4,
**dadurch gekennzeichnet,**
**dass** die Fraktionierung (3) in einem Drucksortierer durchgeführt wird und
**dass** die die Grobfraktion (G) behandelnde Flotation (2) mit einer Konsistenz betrieben wird, die sich von der in der die Feinfraktion (F) behandelnde Flotation (1) um mindestens 0,5 % unterscheidet.

6. Verfahren nach einem der voran stehenden Ansprüche,
**dadurch gekennzeichnet,**
**dass** die die Grobfraktion (G) behandelnde Flotation (2) bei einer Konsistenz von höchstens 1,5 %, vorzugsweise zwischen 0,7 und 1,3 %, durchgeführt wird und die die Feinfraktion (F) behandelnde Flotation (1) bei einer Konsistenz von höchstens 2,5 %, vorzugsweise 1,5 bis 2 %.

7. Verfahren nach einem der voran stehenden Ansprüche,
**dadurch gekennzeichnet,**
**dass** die Verweilzeit der Suspension in der die Grobfraktion (G) behandelnden Flotation (2) um mindestens 10 %, vorzugsweise mindestens 20 %, anders eingestellt wird als die Verweilzeit in der die Feinfraktion (F) behandelnde Flotation (1).

8. Verfahren nach einem der voran stehenden Ansprüche,
**dadurch gekennzeichnet,**
**dass** in der die Grobfraktion (G) bearbeitenden Flotation (2) die auf den Volumenstrom bezogene spezifische Menge der zugeführten Flotationsluft um mindestens 10 %, vorzugsweise 20 %, anders eingestellt ist als in der die Feinfraktion (F) bearbeitende Flotation (1).

9. Verfahren nach einem der voran stehenden Ansprüche,
**dadurch gekennzeichnet,**
**dass** die durchschnittliche Blasengröße in der die Grobfraktion (G) bearbeitenden Flotation (2) anders eingestellt wird als in der die Feinfraktion (F) bearbeitenden Flotation (1), wobei der Unterschied mindestens 10 %, vorzugsweise mindestens 20 %, beträgt.

10. Verfahren nach einem der voran stehenden Ansprüche,
**dadurch gekennzeichnet,**
**dass** das in der Grobfraktion (G) bearbeitenden Flotation (2) herrschende Schwerefeld anders eingestellt wird als das in der die Feinfraktion (F) bearbeitenden Flotation (1).

11. Verfahren nach einem der voran stehenden Ansprüche,
**dadurch gekennzeichnet,**
**dass** in der die Grobfraktion (G) bearbeitenden Flotation (2) eine andere Anzahl von Rejekt bezogenen Flotationsstufen verwendet wird als in der die Feinfraktion (F) bearbeitenden Flotation (1).

12. Verfahren nach einem der voran stehenden Ansprüche,
**dadurch gekennzeichnet,**
**dass** in der die Grobfraktion (G) bearbeitenden Flotation (2) eine andere Anzahl von Gutstoff bezogenen Flotationsstufen verwendet wird als in der die Feinfraktion (F) bearbeitenden Flotation (1).

13. Verfahren nach einem der voran stehenden Ansprüche,
**dadurch gekennzeichnet,**
**dass** in der die Grobfraktion (G) bearbeitenden Flotation (2) ein anderer Überlaufanteil gebildet wird als in der die Feinfraktion (F) bearbeitenden Flotation (1), wobei der Unterschied mindestens 20 % beträgt.

14. Verfahren nach einem der voran stehenden Ansprüche,
**dadurch gekennzeichnet,**
**dass** die Grobfraktion (G) vor der Flotation (2) eingedickt, dispergiert und dann wieder verdünnt wird.

15. Verfahren nach Anspruch 14,
**dadurch gekennzeichnet,**
**dass** die Dispergierung (4) in einem Scheibendisperger oder Kneter bei einer Konsistenz zwischen 15 und 35 % erfolgt.

16. Verfahren nach Anspruch 14,
**dadurch gekennzeichnet,**
**dass** die Dispergierung (4) durch Kompressionsmahlung erfolgt.

17. Verfahren nach Anspruch 14, 15 oder 16,
**dadurch gekennzeichnet,**
**dass** die bei der Dispergierung (4) übertragene spezifische Arbeit zwischen 30 und 120 kWh/t, vorzugsweise ca. 60 kWh/t, liegt.

18. Verfahren nach einem der voran stehenden Ansprüche,
**dadurch gekennzeichnet,**
**dass** die Fraktionierung (3) mit einem Drucksortierer durchgeführt wird, der mit mindestens einem Sieb ausgestattet ist.

19. Verfahren nach Anspruch 18,
**dadurch gekennzeichnet,**
**dass** die Öffnungen im Sieb Schlitze sind, die eine Schlitzweite zwischen 0,08 und 0,3 mm, vorzugsweise 0, 1 bis 0,15 mm, haben.

20. Verfahren nach Anspruch 18,
**dadurch gekennzeichnet,**
**dass** die Öffnungen im Sieb Löcher sind.

21. Verfahren nach Anspruch 20,
**dadurch gekennzeichnet,**
**dass** die Öffnungen im Sieb Rundlöcher sind, die einen Durchmesser zwischen 0,1 mm und 2 mm haben, vorzugsweise 0,3 mm bis 1 mm.

22. Verfahren nach einem der Ansprüche 1 bis 17,
**dadurch gekennzeichnet,**
**dass** die Fraktionierung (3) in einer Schneckenpresse durchgeführt wird.

23. Verfahren nach einem der voran stehenden Ansprüche,
**dadurch gekennzeichnet,**
**dass** die Fraktionierung (3) bei einer Konsistenz zwischen 0,6 % und 4 % durchgeführt wird.

24. Verfahren nach einem der Ansprüche 1 bis 17,
**dadurch gekennzeichnet,**
**dass** die Fraktionierung (3) in Hydrozyklonen bei einer Konsistenz zwischen 0,1 % und 2 %, vorzugsweise 0,3 % - 0,7 %, durchgeführt wird.

25. Verfahren nach einem der voran stehenden Ansprüche,
**dadurch gekennzeichnet,**
**dass** außer den beiden genannten Flotationen (1, 2) keine weitere Flotation zur Entfernung von Störstoffen aus der Faserstoffsuspension durchgeführt wird.
